(19) **Europäisches Patentamt** / **European Patent Office** / **Office européen des brevets**

(11) **EP 4 300 249 B1**

(12) # EUROPEAN PATENT SPECIFICATION

(45) Date of publication and mention of the grant of the patent:
**22.07.2026 Bulletin 2026/30**

(21) Application number: **23210317.6**

(22) Date of filing: **20.12.2018**

(51) International Patent Classification (IPC):
*A47L 9/28* (2006.01)   *A47L 9/00* (2006.01)
*A47L 11/40* (2006.01)   *B25J 9/16* (2006.01)
*B25J 19/02* (2006.01)   *G05D 1/00* (2024.01)

(52) Cooperative Patent Classification (CPC):
**A47L 9/2852; A47L 9/009; G05D 1/0246;**
**G05D 1/0274; A47L 2201/04**

(54) **ROBOTIC VACUUM CLEANER AND CONTROL METHOD THEREFOR**

ROBOTISCHER STAUBSAUGER UND STEUERUNGSVERFAHREN DAFÜR

ROBOT ASPIRATEUR ET PROCÉDÉ DE COMMANDE ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.01.2018 KR 20180002904**

(43) Date of publication of application:
**03.01.2024 Bulletin 2024/01**

(62) Document number(s) of the earlier application(s) in accordance with Art. 76 EPC:
**18900386.6 / 3 738 495**

(73) Proprietor: **LG Electronics Inc.**
**Yeongdeungpo-gu**
**Seoul 07336 (KR)**

(72) Inventors:
• **Shin, Kicheol**
  **08592 Seoul (KR)**
• **Kim, Ingyu**
  **08592 Seoul (KR)**

(74) Representative: **Ter Meer Steinmeister & Partner**
**Patentanwälte mbB**
**Nymphenburger Straße 4**
**80335 München (DE)**

(56) References cited:
**EP-A2- 2 583 610    EP-B1- 2 065 774**
**US-B2- 9 014 855**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present disclosure relates to a robot cleaner and a method of controlling the same.

Background Art

Generally, a cleaner refers to a household appliance for sucking in and removing foreign materials on the floor. Among cleaners, a cleaner capable of automatically performing cleaning is referred to as a robot cleaner. The robot cleaner performs cleaning by sucking in foreign materials on the floor while moving by driving force of a motor driven by a battery. In addition, the robot cleaner includes an obstacle sensor to avoid obstacles while traveling and thus performs cleaning while autonomously traveling.

The robot cleaner needs to create a cleaning map and determine cleaning areas such as an area where cleaning has been completed and an area where cleaning has not been completed in the created cleaning map, in order to clean all areas while autonomously traveling.

Korean Patent Application Publication No. 10-2011-0053767 (publication date: May 24, 2011) discloses a robot cleaner.

The robot cleaner includes a traveling unit for enabling traveling in a cleaning area when a traveling mode command is input, a detector for detecting an object located in the cleaning area during traveling according to the traveling mode command, and a controller for creating a cleaning map for the cleaning area based on location information of the obstacle when the detected object is an obstacle and controlling cleaning operation based on the created cleaning map when the cleaning mode command is input.

Meanwhile, the robot cleaner may not avoid the detected obstacle and may stop by the obstacle, in a process of creating the cleaning map.

In this case, the robot cleaner may perform an escaping algorithm for escaping from an area where the robot cleaner has stopped by the obstacle. The escaping algorithm may be, for example, a series of operation rules for escaping from a point where the cleaner has stopped, such as changing of a traveling direction, forward traveling after backward traveling, etc.

When the robot cleaner escapes from the area where the robot cleaner has stopped by the escaping algorithm, the robot cleaner may register the point on the cleaning map as an obstacle.

Meanwhile, when the robot cleaner does not escape from the point by the escaping algorithm, a jungle may occur in the cleaning map created by the robot cleaner and thus an incorrect obstacle registration problem in which one obstacle is registered several times may occur.

For example, since the jungle occurs in the cleaning map, a cleanable area may be determined as a non-cleanable area. Accordingly, reliability of the cleaning map may be reduced and thus cleaning efficiency of the robot cleaner may not meet the expectations of a user.

US 9 014 855 B2 provides a control method for a cleaning robot with a quasi-omnidirectional detector and a directional light detector. The method includes: rotating the non-omnidirectional light detector when the non-omnidirectional light detector detects a light beam; when the non-omnidirectional light detector does not detect the light beam, the non-omnidirectional light detector is stopped from being spun and a rotation angle is estimated; determining a rotation direction according to the rotation angle; rotating the cleaning robot according to the rotation direction; stopping the rotation of the cleaning robot when the directional light detector detects the light beam.

EP 2 583 610 A2 presents a robot cleaner that includes a body to travel on a floor, an obstacle sensing unit to sense an obstacle approaching the body, an auxiliary cleaning unit mounted to a bottom of the body, to be extendable and retractable, and a control unit to control extension or retraction of the auxiliary cleaning unit when the obstacle is sensed. The control unit recognizes a zone of a charger and performs a control operation to prevent the auxiliary cleaning unit from extending in the charger zone.

EP 2 065 774 B1 A presents a method of navigating an autonomous coverage robot between bounded areas. A navigation beacon is positioned in a gateway between adjoining first and second bounded areas. The beacon is configured to transmit a gateway marking emission across the gateway. The coverage robot is placed within the first bounded area and autonomously traverses the first bounded area in a cleaning mode. Upon encountering the gateway marking emission in the gateway, the robot remains in the first bounded area, thereby avoiding migration into the second area. Upon termination of the cleaning mode in the first area, the robot autonomously initiates a migration mode to move through the gateway, past the beacon, into the second bounded area.

Invention

Technical Problem

An object of the present disclosure devised to solve the problem lies in a robot cleaner capable of improving cleaning efficiency by improving reliability of a cleaning map, and a method of controlling the same.

Another object of embodiments is to provide a robot cleaner capable of improving traveling performance by autonomously determining whether a detected obstacle is avoidable, and a method of controlling the same.

Technical Solution

The invention is set out by the features of the independent claim.

According to an aspect, a robot cleaner includes a main body including a driving unit for movement, an obstacle detection sensor provided in the main body to detect an obstacle, an angle measurement sensor configured to acquire angle information of the main body, a storage unit configured to store a cleaning map created based on a danger area including an area where an obstacle is located, and a control unit configured to perform cleaning such that the main body travels while avoiding the danger area created on the cleaning map, wherein the control unit is configured to determine whether the main body is able to travel with respect to the obstacle, based on the angle information of the main body, and set an area including the obstacle on the cleaning area as the danger area, upon determining that the obstacle restricts traveling of the main body.

The danger area may include a surrounding area of the area where the obstacle is located.

The angle measurement sensor may measure an angle of the main body in a traveling direction and an angle of the main body in a direction crossing the traveling direction.

The control unit may recognize an angle level of the main body relative to the obstacle based on the two angles measured by the angle measurement sensor.

The control unit may calculate a distance between the main body and the obstacle based on the two angles measured by the angle measurement sensor, and recognize the angle level of the main body relative to the obstacle using the calculated distance between the main body and the obstacle.

The distance between the main body and the obstacle may be inversely proportional to the angle of the main body relative to the obstacle.

The control unit may set an area including the obstacle on the cleaning area as the danger area, when the distance between the main body and the obstacle is less than a set value pre-stored in the storage unit.

The control unit may set an area including the obstacle on the cleaning map as a first travelable area able to be overcome by normal traveling, when the distance between the main body and the obstacle is greater than a first set value.

The control unit may set an area including the obstacle on the cleaning map as a second travelable area able to be overcome by rotation traveling of the main body, when the distance between the main body and the obstacle is in a range from the first set value to a second set value less than the first set value.

The control unit may acquire direction information of the obstacle relative to the main body based on angle information of each direction measured by the angle measurement sensor.

According to another aspect, a method of controlling a robot cleaner includes creating a cleaning map of an area specified while a main body travels, detecting an obstacle in a process of creating the cleaning map, the main body traveling toward the obstacle during a set time and then stopping, acquiring angle information of the main body relative to the obstacle, determining whether an area including the obstacle is a danger area based on the angle information, and, by a control unit, storing the danger area in a storage unit and changing a traveling direction of the main body to avoid the danger area, upon determining that an area where the detected obstacle is located is the danger area.

The acquiring of the angle information of the main body relative to the obstacle may include, by an angle measurement unit, measuring a first angle of the main body in a traveling direction and a second angle of the main body in a direction crossing the traveling direction, calculating a distance between the obstacle and the main body based on the measured first and second angles, and determining an angle level of the main body by comparing the measured distance with a set value.

When the distance between the obstacle and the main body is greater than a first set value, an area including the obstacle may be set on the cleaning area as a first travelable area able to be overcome by normal traveling.

When the distance between the obstacle and the main body is in a range from the first set value to a second set value less than the first set value, the control unit may set the area including the obstacle on the cleaning area as a second travelable area able to be overcome by rotation traveling.

When the distance between the obstacle and the main body is less than the second set value, the control unit may set an area including the obstacle on the cleaning area as the danger area.

The method may further include, by an angle measurement unit, acquiring location information of the obstacle using an angle of the main body in a traveling direction and an angle of the main body in a direction crossing the traveling direction, and storing the danger area on the cleaning map based on the acquired location information of the obstacle.

Effect of the Invention

According to embodiments, it is possible to determine whether a robot cleaner can travel with respect to a detected obstacle using angle information of a main body generated by an obstacle. Accordingly, it is possible to improve reliability of a cleaning map, thereby improving cleaning efficiency.

In particular, the robot cleaner can check the angle level of the main boy relative to the obstacle using a principle in which a distance between the main body and the obstacle is inversely proportional to the angle of the main body of the robot cleaner relative to the obstacle, without a separate detection sensor. Accordingly, it is possible to improve obstacle recognition performance by simplifying the configuration of the robot cleaner.

In addition, the robot cleaner may recognize a detected obstacle as any one of an obstacle which may be overcome by normal traveling, an obstacle which may be overcome by rotation, and an obstacle which may not be overcome, based on the distance between the main body and the obstacle. Accordingly, it is possible to further improve cleaning performance of the robot cleaner.

Description of Drawings

FIG. 1 is a perspective view of a robot cleaner according to an embodiment of the present disclosure.

FIG. 2 is a block diagram showing the control configuration of a robot cleaner according to an embodiment of the present disclosure.

FIG. 3 is a view showing an example of an indoor space for performing cleaning according to an embodiment of the present disclosure.

FIG. 4 is a view illustrating a cleaning map created by a method of controlling a robot cleaner of FIG. 3.

FIG. 5 is a view schematically showing a lower obstacle and a robot in order to explain a process of recognizing the lower obstacle according to an embodiment of the present disclosure.

FIG. 6 is a view illustrating a state in which a lower obstacle is set as a danger area on a cleaning map according to an embodiment of the present disclosure.

FIG. 7 is a view schematically showing a robot cleaner avoiding a danger area according to an embodiment of the present disclosure.

FIG. 8 is a flowchart illustrating a method of controlling a robot cleaner according to an embodiment of the present disclosure.

Best Mode

Hereinafter, some embodiments of the present disclosure will be described in detail through exemplary drawings. It should be noted that, in adding reference numerals to the components of each drawing, the same components have the same reference numerals as possible, even if they are shown on different drawings. In addition, in describing embodiments of the present disclosure, if it is determined that the detailed description of a related known function or construction renders the scope of the present disclosure unnecessarily ambiguous, the detailed description thereof will be omitted.

It will be understood that, although the terms first, second, A, B, (a), (b), etc. may be used herein to describe various elements of the present disclosure, these terms are only used to distinguish one element from another element and essential, order, or sequence of corresponding elements are not limited by these terms. It will be understood that when one element is referred to as "being connected to", "being coupled to", or "accessing" another element, one element may "be connected to", "be coupled to", or "access" another element via a further element although one element may be directly connected to or may directly access another element.

[Configuration of robot cleaner]

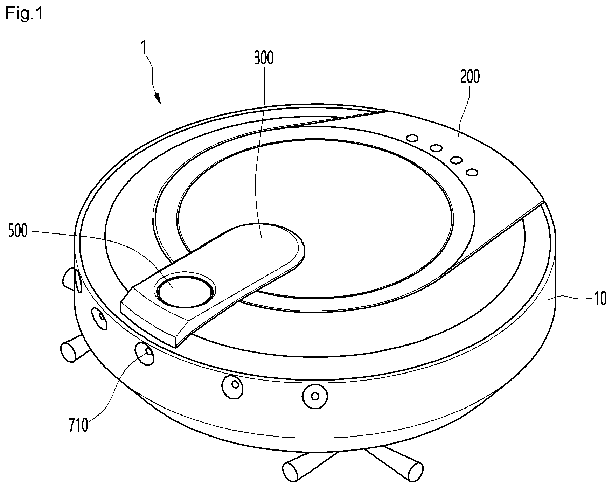

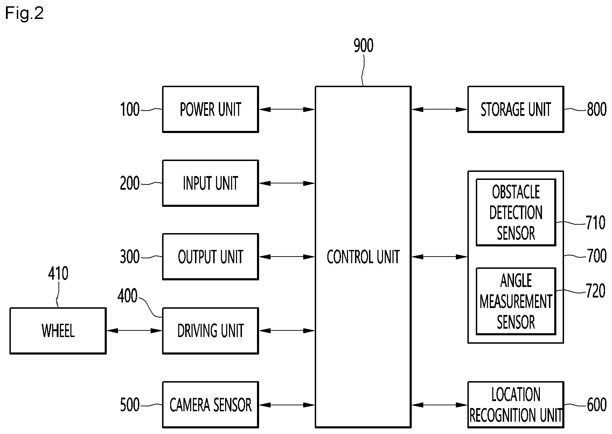

FIG. 1 is a perspective view of a robot cleaner according to an embodiment of the present disclosure, and FIG. 2 is a block diagram showing the control configuration of a robot cleaner according to an embodiment of the present disclosure.

Referring to FIGS. 1 and 2, the robot cleaner 1 according to the embodiment of the present disclosure includes a main body 10 forming appearance thereof.

In the main body 10, a suction unit (not shown) for sucking force may be provided. In the lower side of the main body 10, a suction port (not shown) for sucking in air including dust may be provided.

The robot cleaner 1 may include a power unit 100 provided with a rechargeable power supply to supply power to the robot cleaner.

The power unit 100 supplies power such that the robot cleaner 1 moves and performs cleaning. In addition, when power is insufficient, the robot cleaner 1 may be docked on a charging stand (not shown) provided separately. In addition, the power supply of the power unit 100 may be charged by receiving charging current from the charging stand.

The robot cleaner 1 may further include an input unit 200 for receiving a control command from the outside or receiving a command for outputting one or more pieces of information.

The input unit 200 may include one or more input buttons. In addition, in order for the user to easily press the input buttons, the input buttons may be provided on the upper surface of the main body 10. In addition, a user may input a command for control of the robot cleaner 1, such as a cleaning map, a cleaning area, location information, obstacle information and a cleaning mode through the input buttons.

Meanwhile, a separate terminal (not shown) connected to the robot cleaner 1 wirelessly or by wire may be further provided, and the user may input a control command to the robot cleaner 1 using the terminal.

The robot cleaner 1 may further include an output unit 300 for displaying state information or displaying output information of the command input through the input unit 200.

The output unit 300 may be any one of a light emitting diode (LED), a liquid crystal display (LCD), a plasma display panel and an organic light emitting diode (OLED) to output text and pictures. In addition, the output unit 300 may include a unit for outputting sound, such as a beeper or a speaker.

The robot cleaner 1 includes a driving unit 400 for movement of the robot cleaner 1. The driving unit 400 is provided in the main body 10.

The driving unit 400 may include one or more wheels 410 and a motor (not shown) for driving the one or more wheels 410 in the main body 10.

In the present disclosure, for convenience of description, it is assumed that the main body 10 includes a pair of wheels 410.

The motor is controlled by a control unit 900 which will be described. According to control of the control unit 900, the robot cleaner 1 may move forward or backward or turn left or right.

The robot cleaner 1 further includes a storage unit 800 in which a variety of information such as state information, location information, a cleaning mode, etc. are stored.

The storage unit 800 stores a predetermined cleaning map. The cleaning map may include a danger area including an area where an obstacle is located and a surrounding area of the area where the obstacle is located. The danger area will be described below.

A direction will be defined.

When the driving unit 400 is driven in a forward direction, the robot cleaner 1 may move forward. On the other hand, when the driving unit 400 is driven in a reverse direction, the robot cleaner 1 may move backward.

In addition, a direction in which one surface of the robot cleaner 1 facing a ceiling surface is located is an upper direction of the robot cleaner 1 and a direction in which one surface of the robot cleaner 1 facing a floor surface is located is a lower direction of the robot cleaner 1.

The robot cleaner 1 may include a camera sensor 500 for acquiring external image information.

The camera sensor 500 may be provided on the upper surface of the robot cleaner 1 to acquire image information of the upper side of the robot cleaner 1. In addition, the camera sensor 500 may be further provided in the lower surface of the robot cleaner 1. The camera sensor provided in the lower surface of the robot cleaner 1 may acquire image information of the lower side of the robot cleaner 1.

The robot cleaner 1 may include a location recognition unit 600 for recognizing the current location of the robot cleaner 1 within the cleaning area.

The location recognition unit 600 may include, for example, a speed detection sensor (not shown) for acquiring the current speed information of the robot cleaner 1 and a gyro sensor (not shown) for acquiring direction change information of the robot cleaner 1.

In addition, based on the information acquired by the sensors and the information acquired by the camera sensor 500, the current location of the robot cleaner 1 may be determined.

The robot cleaner 1 further includes an obstacle detection unit 700 for detecting an obstacle.

The obstacle detection unit 700 may detect an obstacle which is moving in the cleaning area or is located around the robot cleaner. The obstacle detection unit 700 may include a plurality of sensors. In addition, each sensor may have unique detection characteristics.

The plurality of detection sensors may include an obstacle detection sensor 710 for measuring the height or depth of an obstacle located at the front side thereof and an angle measurement sensor 720 for measuring the currently tilted state of the robot cleaner 1.

The obstacle detection sensor 710 may be located at the lower surface of the main body 10 in order to measure the height or depth of the lower surface of the main body 10. In addition, in order to measure the height or depth of an object located in the traveling direction of the robot cleaner 1, the obstacle detection sensor 710 may be further provided at the front side of the main body 10, for example. The obstacle detection sensor 710 may include a laser sensor, an ultrasonic sensor, etc., for example.

The angle measurement sensor 720 measures the coordinate value of the main body 10 based on an x- and y-axis coordinate system when a lower obstacle is recognized by the obstacle detection sensor 710.

Specifically, the traveling direction of the main body 10 may be understood as the Y-axis. In addition, the left-and-right direction of the traveling direction of the main body 10 may be understood as the X-axis. The angle measurement sensor 720 may include at least one of an acceleration sensor or a gyro sensor, for example.

Information on the x- and y-axes measured in the angle measurement sensor 720 may be transmitted to the control unit 900. The control unit 900 may calculate the tilted degree and direction of the main body 10 using the information on the x- and y-axes. Calculation of the tilted degree and direction of the main body 10 by the control unit 900 will be described below in detail.

The robot cleaner 1 further includes the control unit 900 for searching for the cleaning area of an indoor space to create a cleaning map and controlling the modules (the power unit 100, the input unit 200, the output unit 300, the driving unit 400, the camera sensor 500, the location recognition unit 600, the obstacle detection unit 700, and the storage unit 800) provided in the main body 10 to perform cleaning.

The cleaning map created by the control unit 900 may be stored in the storage unit 800. In addition, the control unit 900 may search for or clean the cleaning area according to the command input through the input unit 200, based on the cleaning map stored in the storage unit 800. At this time, while the robot cleaner 1 travels or performs cleaning, the control unit 900 may create the cleaning map using wall search or cell division.

In the present disclosure, generating the cleaning map using wall search or cell division is a well-known technique and thus a detailed description will be omitted.

The control unit 900 may grasp the current location of the robot cleaner 1 on the cleaning map by referring to the information stored in the storage unit 800, and grasp a cleaning completion area and a cleaning non-completion area based on the movement path of the robot cleaner 1.

In addition, the control unit 900 may control the obstacle detection unit 700 to determine whether a danger area is present in a cleaning area where the robot cleaner is traveling. The danger area may mean an area where an obstacle stopping traveling of the robot cleaner 1 is located.

For example, the robot cleaner 1 may stay during a set time within a set range by the obstacle detected by the obstacle detection unit 700. In this case, the control unit 900 may store an area where an obstacle is located in the storage unit 800 as the danger area. Even if an obstacle is detected by the obstacle detection unit 700, the robot cleaner 1 may escape from the area where the obstacle is detected, without changing the traveling direction.

In another example, the robot cleaner 1 may stay during a set time within the set range, even if the obstacle is not detected by the obstacle detection unit 700. In this case, movement of the robot cleaner 1 may be restricted by an obstacle which is not detected by the obstacle detection unit 700.

Accordingly, the control unit 900 may store the area where the robot cleaner stay during the set time within the set range in the storage unit 800 as the danger area. Accordingly, it is possible to more accurately determine the danger area where the obstacle is located.

Accordingly, when the danger area is detected while the robot cleaner 1 travels, the control unit 900 changes the traveling direction of the robot cleaner 1. Therefore, it is possible to reduce a phenomenon wherein the robot cleaner 1 stops by the obstacle.

Meanwhile, as described above, the robot cleaner 1 may further include a timer (not shown) capable of measuring a time, in order to determine whether the robot cleaner 1 is normal or abnormal by measuring a time.

The control unit 900 may store the detected danger area set on the cleaning map in the storage unit 800.

[Cleaning map on which danger area is set by the control unit]

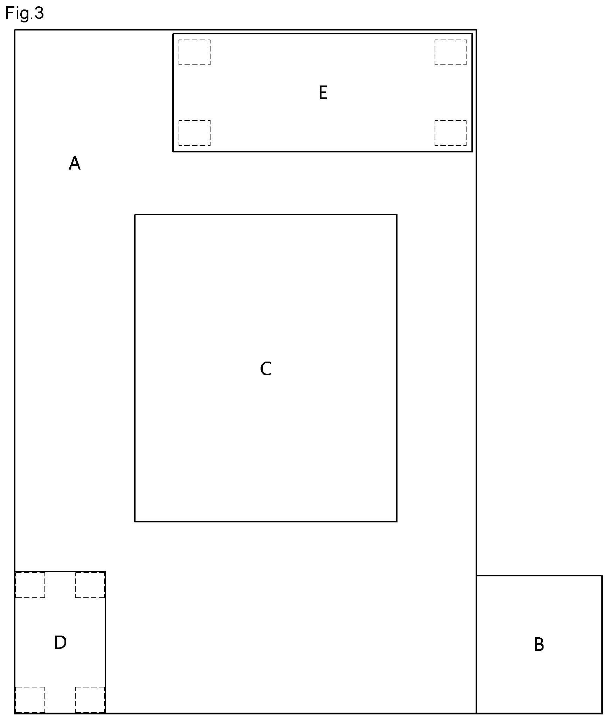

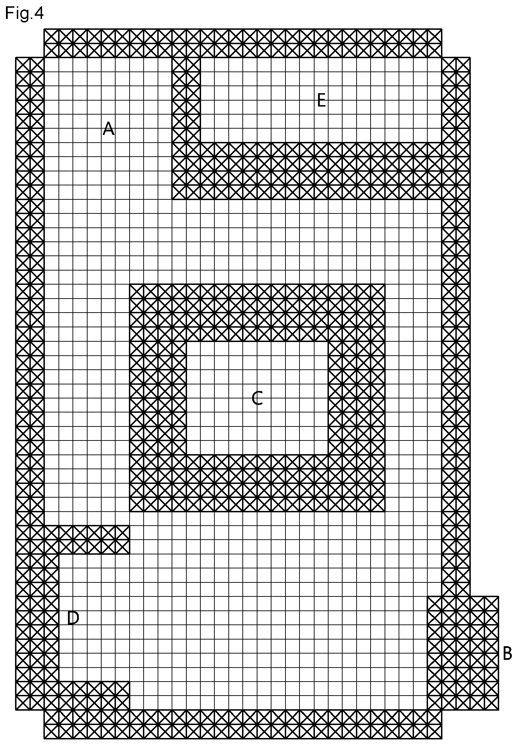

FIG. 3 is a view showing an example of an indoor space for performing cleaning according to an embodiment of the present disclosure, and FIG. 4 is a view illustrating a cleaning map created by the control unit of the robot cleaner of FIG. 3.

Referring to FIGS. 3 and 4, the robot cleaner 1 may create the cleaning map shown in FIG. 4 while traveling in the indoor space A shown in FIG. 3.

For example, the control unit 900 may divide the cleaning map into a plurality of blocks. In addition, the control unit 900 may create the cleaning map, by dividing the indoor space A into an area where cleaning is possible and an area where cleaning is restricted, during traveling. The number or size of blocks may be set by a user. The size of the block may be set to, for example, 10 cm horizontally and 10 cm vertically.

Meanwhile, in the detailed description of the indoor space A, reference numeral B may mean a separate space different from the indoor space A in terms of height.

The height of the indoor space A may be greater than that of the space denoted by reference numeral B. Reference numeral B may mean a front entrance, for example.

In addition, reference numeral C may mean an obstacle which is placed on the floor and on which the robot cleaner 1 travels. For example, reference numeral C may mean a carpet.

Reference numeral D may mean an obstacle having a lower space in which the robot cleaner 1 may travel. Reference numeral D may mean a table, for example.

In addition, reference numeral E may mean an obstacle having a lower space which the robot cleaner 1 cannot enter. For example, reference numeral E may mean a bed.

Meanwhile, while the robot cleaner 1 travels, the control unit 900 may determine whether an obstacle is detected through the obstacle detection unit 700. The control unit 900 may detect the obstacle using the obstacle detection sensor 710. When the height of the obstacle in the traveling direction of the robot cleaner 1 is greater than that of the floor, the control unit 900 may detect that the obstacle is located ahead of the robot cleaner 1.

The obstacle may include a wall forming the outer periphery of the indoor space A, a carpet C, a table D and a bead E, for example.

Alternatively, when the obstacle in the traveling direction of the robot cleaner 1 is lower than the floor on which the robot cleaner is traveling, the control unit 900 may detect that the obstacle is located ahead of the robot cleaner 1. The obstacle may be a cliff formed by a step difference between the indoor space A and the front entrance B.

Upon determining that entry into an area where the obstacle is detected is impossible, the control unit 900 may set and register (or store) the area where the obstacle is detected in the storage unit 800 as the danger area. That is, the danger area set by the control unit 900 may be set on the cleaning map and stored in the storage unit 800.

Accordingly, when the robot cleaner 1 travels toward an area including the danger area while performing cleaning, the robot cleaner 1 travels to avoid the danger area by changing the direction thereof.

Hereinafter, a method of, by the control unit 900, recognizing an obstacle based on angle information of the main body 10 will be described.

[Method of recognizing obstacle of robot cleaner]

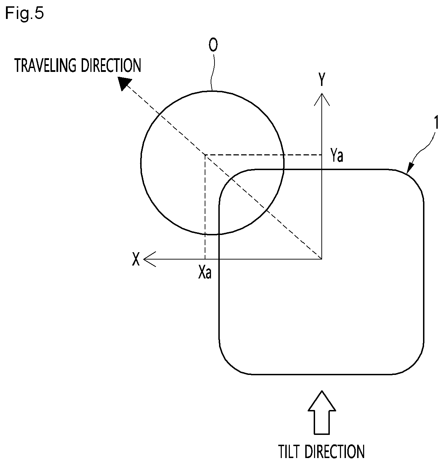

FIG. 5 is a view schematically showing a lower obstacle and a robot cleaner in order to explain a method of recognizing the lower obstacle according to an embodiment of the present disclosure.

Referring to FIG. 5, the control unit 900 may recognize an obstacle at the front or lateral side of the center of the main body 10 through the obstacle detection unit 700.

When the obstacle located at the front or lateral side is recognized by the obstacle detection unit 700, the control unit 900 may measure the angle value of each of the X- and Y- axes using the angle measurement sensor 720.

In addition, the tilted degree of the main body 10 by the obstacle and the direction of the obstacle may be calculated through a calculation process using Equations 1 and 2 below.

<Method of measuring angle level of main body 10 by obstacle>

First, the control unit 900 may calculate a distance between the main body 10 and the obstacle through Equation 1 below.

$$S = K * \frac{1}{\sqrt{Xa^2 + Ya^2}} + B$$

In Equation 1, a symbol "S" may be understood as information on a distance between a point which is estimated as the center of the obstacle O and the center of the main body 10. In addition, symbol "Xa" may be understood as the X-axis angle value of the main body 10 measured by the angle measurement sensor 720. In addition, symbol "Ya" may be understood as the Y-axis angle value of the main body 10 measured by the angle measurement sensor 720. In addition, symbol "B" may be understood as a physical constant set by a designer in order to reduce error through experimentation.

According to Equation 1, using the X- and Y-axis angle values occurring while the main body 10 travels, the control unit 900 may acquire information on a distance between the center of the obstacle O and the center of the main body 10. The control unit 900 may determine whether the main body 10 is able to overcome the obstacle using information on the distance between the center of the main body 10 and the center of the obstacle O.

Specifically, the distance between the center of the main body 10 and the center of the obstacle O may be inversely proportional to the angle level of the main body 10. For example, as the distance between the center of the main body 10 and the center of the obstacle O increases, an obstacle O having a small angle level (or a gentle angle) may be understood as being located. As the angle level of the obstacle O decreases, it is easier for the main body 10 to overcome the obstacle.

Accordingly, when the distance between the center of the main body 10 and the center of the obstacle O is recognized to be equal to or greater than a set value, the control unit 100 may recognize the obstacle O as an overcomeable obstacle. In addition, an area where the overcomeable obstacle is located may be stored on the cleaning map.

On the contrary, as the distance between the center of the main body 10 and the center of the obstacle O decreases, an obstacle O having a large angle level (or a steep angle) may be understood as being located. As the angle level of the obstacle O increases, it is harder for the main body 10 to overcome the obstacle.

Accordingly, when the distance between the center of the main body 10 and the center of the obstacle O is recognized as being less than the set value, the control unit 100 may recognize the obstacle O as a unovercomeable obstacle. In addition, an area where the unovercomeable obstacle is located may be set as a danger area and set on the cleaning map.

<Method of acquiring location information of obstacle in traveling direction of main body of robot cleaner>

Next, the control unit 900 may acquire the location information (or the direction information) of the obstacle in the traveling direction of the main body 10 through Equation 2 below.

$$\theta = \arcsin \frac{Xa}{\sqrt{Xa^2 + Ya^2}}$$

In Equation 2, symbol "θ" may be understood as direction information (or a degree) of the obstacle relative to the main body 10. In addition, symbol "Xa" may be understood as the X-axis angle value of the main body 10 measured by the angle measurement sensor 720. In addition, symbol "Ya" may be understood as the Y-axis angle value of the main body 10 measured by the angle measurement sensor 720.

Through Equation 2, the control unit 900 may recognize the direction information of the obstacle based on the center of the main body 10.

<Information on obstacle set on cleaning map>

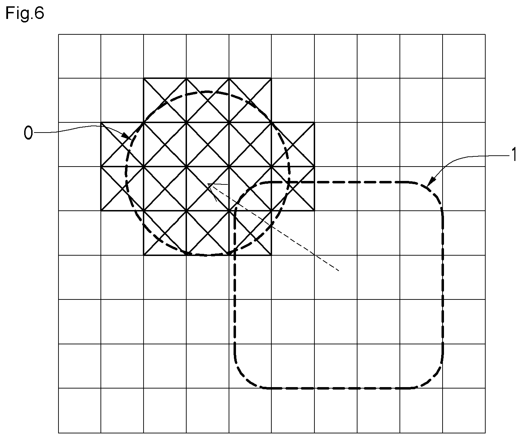

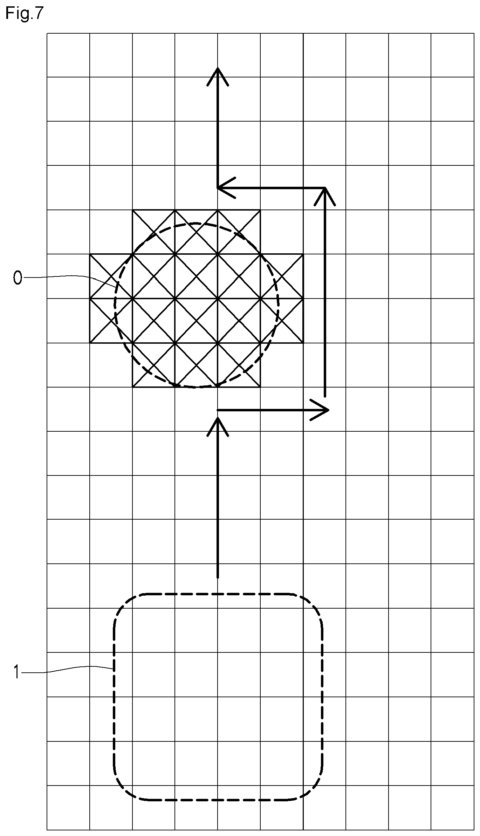

FIG. 6 is a view illustrating a state in which an obstacle, entry into which is recognized as being impossible, is set as a danger area on a cleaning map according to an embodiment of the present disclosure, and FIG. 7 is a view schematically showing a robot cleaner avoiding a danger area according to an embodiment of the present disclosure.

Referring to FIG. 6, when an obstacle is recognized by the obstacle detection sensor 710, the control unit 900 may control the driving unit 400 to drive the main body 10 toward the obstacle during a set time and then stop the main body.

In other words, by control of the driving unit 400 of the control unit 900, the main body 10 may climb the obstacle having a predetermined height during the set time and then stop. Alternatively, by control of the driving unit 400 of the control unit 900, the main body 10 may travel with respect to an obstacle having a predetermined depth during the set time and then stop.

The control unit 900 may acquire information on a distance between the main body 10 and the obstacle and direction information of the obstacle, after stopping the main body 10.

In addition, the control unit 900 may set any one of a danger area and a travelable area on the cleaning map based on the distance information and the direction information.

The danger area may be understood as an area with an obstacle which restricts traveling of the main body 10. The danger area may be set as an abnormal block on the cleaning map divided into a plurality of blocks. The abnormal block may be marked with "X" as shown in the figure. However, the mark of the abnormal block is not limited to a symbol "X" and languages and numerals available in the control unit 900 may be set.

The control unit 900 may set a location where the abnormal block will be set (direction in which the obstacle is calculated to be present) using the direction information. In addition, the control unit 900 may set a set number of abnormal blocks on the cleaning map based on the distance information (or angle information) calculated through Equation 1.

Accordingly, the danger area may be set on the cleaning map through setting of the abnormal block. The method of setting the abnormal block forming the danger area may be pre-stored in the storage unit 600. For example, when it is difficult for the main body 10 to overcome the obstacle detected through the obstacle detection sensor 710, the control unit 900 may set the abnormal blocks to be distributed in a radial form based on the center of the obstacle. At this time, the number of abnormal blocks forming the danger area may be predetermined.

In another example, the control unit 900 may set the number of abnormal blocks forming the danger area to be proportional to a distance between the center of the main body 10 and the center of the obstacle.

Meanwhile, the travelable area may be understood as an area where an obstacle which allows the main body 10 to travel. For example, the obstacle which allows the main body 10 to travel may include a threshold, a carpet, etc. The travelable area may be set as a normal block different from the abnormal block.

Referring to FIG. 7, while the main body 10 travels, the control unit 900 may monitor detection of the obstacle using the obstacle detection sensor 700. Specifically, the control unit 900 may detect an obstacle through the obstacle detection sensor 710 while traveling.

When the obstacle is detected by the obstacle detection sensor 710, the control unit 900 may determine whether an area where the obstacle is located corresponds to any one of the danger area, an unset area and the travelable area.

When the danger area is recognized, as shown in the figure, the control unit 900 controls the driving unit 400 such that the main body 10 travels to avoid the danger area.

Meanwhile, when the area where the obstacle is located is the unset area, the control unit may acquire information on the obstacle through Equations 1 and 2. In addition, by comparing the information on the obstacle with the information stored in the storage unit 800, it is possible to determine whether the area where the obstacle is located is the danger area.

In addition, when the area where the obstacle is located is the travelable area, the control unit 900 controls the driving unit 400 such that the main body 10 travels without avoiding the obstacle.

[Method of calculating the danger area for lower obstacle according to measured angle]

Hereinafter, a method of detecting a lower obstacle of an indoor space while the robot cleaner 1 performs cleaning and setting the danger area based on the detected information will be described.

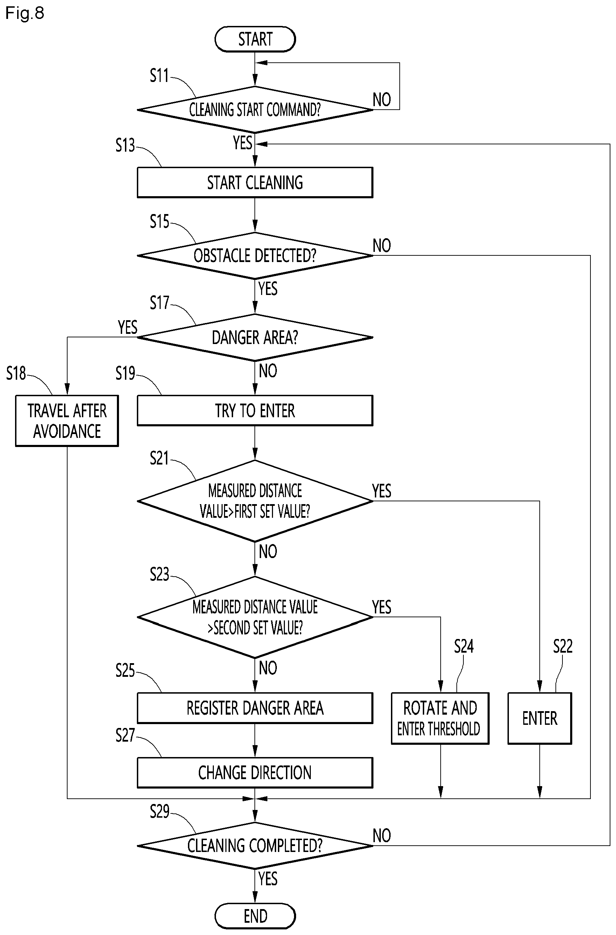

FIG. 8 is a flowchart illustrating a method of controlling a robot cleaner according to an embodiment of the present disclosure.

Referring to FIG. 8, the control unit 900 of the robot cleaner 1 may operate based on a control mode selected by the command of a user (S11). That is, the control unit 900 may control the driving unit 400 based on the command of the user input through the input unit 200.

The control mode may include, for example, a mode in which a cleaning map for cleaning is created, a mode in which a cleaning map is created while cleaning is performed, and a mode in which cleaning is performed based on a pre-created cleaning map.

However, in the present embodiment, for convenience of description, creation of the cleaning map while performing cleaning will be described.

The control unit 900 of the robot cleaner 1 may perform cleaning by a cleaning start command of the user (S13).

The control unit 900 may create the cleaning map having a plurality of blocks, as shown in FIG. 4. In addition, the control unit 900 may create the cleaning map divided into a cleanable area and a cleaning limitation area, while traveling in the indoor space A. The number or size of blocks may be set by the user.

While the robot cleaner 1 travels, the control unit 900 may determine whether the obstacle is detected through the obstacle detection unit 700 (S15).

The control unit 900 may detect the obstacle using height information or depth information measured by the obstacle detection sensor 710. When the height of an object located in the traveling direction of the robot cleaner 1 is higher than that of the floor or the depth of the object is lower than that of the floor, the control unit 900 may detect that the obstacle is located ahead of the robot cleaner 1.

The obstacle may include, for example, a wall forming the outer periphery of the indoor space A, a carpet C, a table D, a bed E and a front entrance B. The control unit 900 may control the driving unit 400 such that the main body 10 travels (or cleans) in a specified area while monitoring detection of the obstacle (S15 to S29).

Meanwhile, when the obstacle is detected by the obstacle detection unit 700 while the main body travels in the specified area, the control unit 900 may determine whether the area where the obstacle is detected is any one of the travelable area, the danger area and the unset area.

The travelable area may be understood as an area where an obstacle which does not interrupt traveling of the main body 10 is located. The travelable area may be set as one or more normal blocks which may be determined by the control unit 900 as an area where cleaning may be performed. The travelable area will be described in detail below.

Meanwhile, the danger area may be understood as an area where an obstacle which interrupt traveling of the main body 10 is located. In other words, traveling of the main body 10 may be interrupted by the obstacle in the danger area.

Accordingly, the danger area may be an area where the main body 10 changes a direction thereof in order to continuously travel. The danger area is distinguished from the normal block and may be set as one or more abnormal blocks which may be determined such that the control unit 900 change the traveling direction of the main body 10. The abnormal block may be, for example, marked with "X" as shown in FIG. 4.

Upon determining that the area where the obstacle detected by the obstacle detection unit 700 is located is the danger area (S17), the control unit 900 may continuously travel to avoid the danger area (S18). The danger area may be pre-stored in the storage unit 800.

Meanwhile, when the area where the obstacle detected by the obstacle detection unit 700 is located is recognized as the unset area or the travelable area, the control unit 900 may control the driving unit 600 such that the main body tries to travel toward (or enter) the obstacle (S19).

When the area where the obstacle is located is recognized as the travelable area, the control unit 900 may control the driving unit 400 to perform traveling. Here, the travelable area may include a first travelable area and a second travelable area.

The first travelable area may be understood as an area where the main body 10 may overcome the obstacle through normal traveling of the driving unit 400.

In addition, the second travelable area may be understood as an area where an obstacle on which the main body 10 may travel is located, through rotation traveling of the driving unit 400.

Here, the rotation traveling may be understood as overcoming the obstacle while the robot cleaner 1 rotates based on the center of the main body 10.

In another example, when the second travelable area is recognized, the control unit 900 may control the driving unit 400 to move the main body 10 backward by a certain distance and move forward again. In this case, by acceleration of the main body 10, the robot cleaner 1 may overcome the obstacle.

Meanwhile, when the area where the obstacle detected by the obstacle detection unit 700 is located is the unset area, the control unit 900 may determine whether traveling is possible. The control unit 900 may acquire the current angle of the main body 10 and information on the area where the obstacle is located, using the angle measurement unit 720, in a process of entering the unset area.

Specifically, when the obstacle is detected, the control unit 900 may set the unset area as the danger area or the travelable area through calculation of Equations 1 and 2 based on information acquired by the angle measurement unit 720.

The control unit 900 may check the angle level of the main body 10 and determine whether the main body 10 may enter the obstacle (S21). The control unit 900 may acquire the current angle value of the main body 10 using the angle measurement sensor 720.

In addition, the control unit 900 may calculate a distance between the center of the main body 10 and the center of the obstacle, by applying the angle value to Equations 1 and 2 above.

The calculated distance between the center of the main body 10 and the center of the obstacle may be used to predict the tilt (or the angle) of the obstacle. For example, when the distance between the center of the main body 10 and the center of the obstacle is small, the tilt (angle) of the obstacle may be understood as being large. In another example, when the distance between the center of the main body 10 and the center of the obstacle is small, the tilt (angle) of the obstacle may be understood as being small.

Hereinafter, for convenience of description, the distance between the center of the main body 10 and the center of the obstacle calculated by the control unit 900 is referred to as a "measured distance value".

The control unit 900 may determine whether the main body 10 may travel with respect to the detected obstacle, by comparing the measured distance value with the first set distance value (the first set value) (S21).

When the measured distance value is equal to or greater than the first set value, the control unit 900 may control the driving unit 400 such that the main body 10 travels with respect to the obstacle (S22).

In addition, the control unit 900 may set the area including the obstacle on the cleaning map as the first travelable area. The cleaning map on which the first travelable area is set may be stored in the storage unit 800.

Accordingly, when the robot cleaner 1 travels next time, since the area including the obstacle is recognized as the first travelable area, the control unit 900 may perform traveling without the process of determining the danger area (S22).

Meanwhile, when the measured distance value is recognized as being less than the first set value, the control unit 900 may compare the measured distance value with a second set value less than the first set value (S23).

When the measured distance value is between the first set value and the second set value, the control unit 900 may drive the driving unit 400 such that the main body 10 performs rotation traveling to overcome the obstacle (S24).

Specifically, the control unit 900 may recognize the obstacle detected by the obstacle detection sensor 710 as an obstacle which may be overcome by rotation traveling of the main body 10.

The control unit 900 may overcome the obstacle by rotation traveling of the main body 10. The robot cleaner 10 may overcome the obstacle using rotation force. Here, rotation traveling of the main body 10 may be understood as rotation. In addition, the obstacle may be understood as a threshold, for example.

In addition, the control unit 900 may store the area where the obstacle is located in the storage unit 600 as the second travelable area where the main body may travel with respect to the obstacle through rotation traveling.

In other words, the control unit 900 may set the area where the obstacle is located on the cleaning map as the second travelable area. Accordingly, when the robot cleaner 1 travels next time, since the obstacle is recognized as the second travelable area, the obstacle may be overcome through rotation traveling without the process of determining the danger area.

Meanwhile, when the measured distance value is recognized as being less than the second set in step S23, the control unit 900 may store the area including the obstacle in the storage unit 600 as the danger area (S25).

Accordingly, when the robot cleaner 1 travels next time, since the area including the obstacle is recognized as the danger area, the control unit 900 may avoid the danger area without the process of determining the danger area.

The control unit 900 may repeatedly perform the process of steps S13 to S27 until cleaning is completed (S29).

According to the embodiment, it is possible to improve reliability of the cleaning map of the robot cleaner 1 and to improve cleaning efficiency.

In addition, the robot cleaner 1 may determine whether the robot cleaner may travel with respect to the detected obstacle using the angle information of the main body 10 generated by the obstacle.

In particular, the robot cleaner 1 may check the angle level of the main body 10 relative to the obstacle using the principle that the distance between the main body 10 and the obstacle is inversely proportional to the angle of the main body 10, without a separate detection sensor. Accordingly, it is possible to simplify the configuration of the robot cleaner 1 and to improve obstacle recognition performance.

In addition, the robot cleaner 1 may recognize an obstacle detected based on the distance between the main body 10 and the obstacle as any one of an obstacle which may be overcome by normal traveling, an obstacle which may be overcome by rotation traveling and an obstacle which may not be overcome. Accordingly, it is possible to further improve cleaning performance of the robot cleaner 1.

**Claims**

1.  A robot cleaner (1) comprising:

    a main body (10) including a driving unit (400) for movement;
    an obstacle detection sensor (710) provided in the main body (10) to detect an obstacle;
    a storage unit (800) configured to store a cleaning map; and
    a control unit (900) configured to control the main body (10) to perform cleaning based on the cleaning map, and to monitor detection of the obstacle by the obstacle detection sensor (710) while traveling,
    **characterized in that**, when the obstacle is detected, the control unit (900) is configured to determine whether an area where the obstacle is located corresponds to any one of a danger area, and a travelable area, wherein the danger area is as an area where an obstacle which interrupts traveling of the main body (10) is located and the travelable area is as an area where an obstacle which does not interrupt traveling of the main body (10) is located; and
    wherein the control unit (900) is configured:

    - to control the driving unit (400) such that the main body (10) travels to avoid the danger area when the danger area is recognized, and
    - to control the driving unit (400) to travel without avoiding the obstacle when the obstacle is located in the travelable area.

2. The robot cleaner (1) of claim 1, further comprising: an angle measurement sensor (720) configured to measure an angle of the main body (10) to the obstacle detected by the obstacle sensor (710), wherein the control unit (900) is configured to determine a distance between the main body (10) and the obstacle based on the angle measured by the angle measurement sensor (720).

3. The robot cleaner (1) of claim 1, further comprising an angle measurement sensor (720) configured to measure an angle of the main body (10) to the obstacle in a traveling direction and an angle of the main body (10) to the obstacle in a direction crossing the traveling direction, and wherein the control unit (900) is configured to calculate a distance between the main body (10) and the obstacle based on the two angles measured by the angle measurement sensor (720).

4. The robot cleaner (1) of claims 2 or 3, wherein the control unit (900) is configured to set an area including the obstacle on the cleaning map as a first travelable area able to be overcome by normal traveling, when the distance between the main body (10) and the obstacle is greater than a first set value.

5. The robot cleaner (1) of claim 4, wherein the control unit (900) is configured to store, in the storage unit (800), the cleaning map in which the first travelable area is set, and wherein when the robot cleaner (1) travels next time to the area recognized as the first travelable area, the control unit (900) is configured to perform traveling without determining whether the area where the obstacle is located corresponds to the danger area.

6. The robot cleaner (1) of claim 4 or 5, wherein the control unit (900) is configured to set an area including the obstacle on the cleaning map as a second travelable area able to be overcome by rotation traveling of the main body (10), when the distance between the main body (10) and the obstacle is in a range from the first set value to a second set value less than the first set value.

7. The robot cleaner (1) of claim 4 or 5, wherein the control unit (900) is configured to recognize an area including the obstacle as a second travelable area when the distance between the main body (10) and the obstacle is in a range from the first set value to a second set value less than the first set value, and is configured to control the driving unit (400) to move the main body (10) backward by a certain distance and move forward again to overcome the obstacle by acceleration of the main body (10).

8. The robot cleaner (1) of claim 6 or 7, wherein the control unit (900) is configured to store, in the storage unit (800), the cleaning map in which the second travelable area is set, and wherein when the robot cleaner (1) travels next time to the area recognized as the second travelable area, the control unit (900) is configured to perform traveling without determining whether the area where the obstacle is located corresponds to the danger area.

9. The robot cleaner (1) of any one of claims 6 to 8, wherein when the distance between the main body (10) and the obstacle is less than the second set value, the control unit (900) is configured to store an area including the obstacle in the storage unit (800) as the danger area, ).

10. The robot cleaner (1) of any one of the preceding claims when depending on claim 3, wherein the control unit (900) is configured to acquire direction information of the obstacle relative to the main body (10) based on angle information of each direction measured by the angle measurement sensor (720).

11. The robot cleaner (1) of any one of the preceding claims, wherein the control unit (900) is configured to detect height or depth of the obstacle by the obstacle detection sensor (710).

12. The robot cleaner (1) of any one of the preceding claims, wherein the control unit (900) is configured:

    to divide the cleaning map into a plurality of blocks,
    to set the danger area as an abnormal block marked using a symbol, and
    to set the travelable area as a normal block different from the abnormal block.

13. A method of controlling a robot cleaner (1) according to any one of the preceding claims, the method comprising:

    controlling the main body (10) to perform cleaning based on the cleaning map, and monitoring detection of the obstacle by the obstacle detection sensor (710) while traveling;
    when the obstacle is detected, the determining whether an area where the obstacle is located corresponds to any one of a danger area, and a travelable area;
    controlling the driving unit (400) such that the main body (10) travels to avoid the danger area when the danger area is recognized; and
    controlling the driving unit (400) to travel without avoiding the obstacle when the obstacle is located in the travelable area.

14. The method of claim 13, wherein the method further comprising:

measuring an angle of the main body (10) to the obstacle in a traveling direction and an angle of the main body (10) to the obstacle in a direction crossing the traveling direction, and
calculating a distance between the main body (10) and the obstacle based on the two angles measured by the angle measurement sensor (720).

15. The method according to claim 14, the method further comprising at least one of:

- setting an area including the obstacle on the cleaning map as a first travelable area able to be overcome by normal traveling, when the distance between the main body (10) and the obstacle is greater than a first set value;
- (i) setting an area including the obstacle on the cleaning map as a first travelable area able to be overcome by normal traveling, when the distance between the main body (10) and the obstacle is greater than a first set value, and (ii) setting an area including the obstacle on the cleaning map as a second travelable area, when the distance between the main body (10) and the obstacle is in a range from the first set value to a second set value less than the first set value, wherein the second travelable area is able to be overcome by rotation traveling of the main body (10), or by moving the main body (10) backward by a certain distance and moving forward again to overcome the obstacle by acceleration of the main body (10); and
- (i) setting an area including the obstacle on the cleaning map as a first travelable area able to be overcome by normal traveling, when the distance between the main body (10) and the obstacle is greater than a first set value, and (ii) setting an area including the obstacle on the cleaning map as a second travelable area, when the distance between the main body (10) and the obstacle is in a range from the first set value to a second set value less than the first set value, wherein the second travelable area is able to be overcome by rotation traveling of the main body (10), or by moving the main body (10) backward by a certain distance and moving forward again to overcome the obstacle by acceleration of the main body (10), and (iii) setting an area including the obstacle on the cleaning area as the danger area, when the distance between the main body (10) and the obstacle is less than the second set value.

**Patentansprüche**

1. Reinigungsroboter (1), der Folgendes umfasst:

einen Hauptkörper (10), der eine Antriebseinheit (400) für die Bewegung enthält;
einen Hindernisdetektionssensor (710), der im Hauptkörper (10) vorgesehen ist, um ein Hindernis zu detektieren;
eine Speichereinheit (800), die konfiguriert ist, eine Reinigungskarte zu speichern; und
eine Steuereinheit (900), die konfiguriert ist, den Hauptkörper (10) zu steuern, auf der Grundlage der Reinigungskarte eine Reinigung durchzuführen, und die Detektion eines Hindernisses durch den Hindernisdetektionssensor (710) während des Fahrens zu überwachen,
**dadurch gekennzeichnet, dass** dann, wenn das Hindernis detektiert wird, die Steuereinheit (900) konfiguriert ist zu bestimmen, ob ein Bereich, in dem das Hindernis angeordnet ist, irgendeinem eines Gefahrenbereichs und eines befahrbaren Bereichs entspricht, wobei der Gefahrenbereich ein Bereich ist, in dem ein Hindernis angeordnet ist, das das Fahren des Hauptkörpers (10) unterbricht, und der befahrbare Bereich ein Bereich ist, in dem ein Hindernis angeordnet ist, das das Fahren des Hauptkörpers (10) nicht unterbricht; und
wobei die Steuereinheit (900) konfiguriert ist zum:

- Steuern der Antriebseinheit (400), derart, dass der Hauptkörper (10) so fährt, dass der Gefahrenbereich vermieden wird, wenn der Gefahrenbereich erkannt wird, und
- Steuern der Antriebseinheit (400) zu fahren, ohne das Hindernis zu vermeiden, wenn das Hindernis im befahrbaren Bereich angeordnet ist.

2. Reinigungsroboter (1) nach Anspruch 1, der ferner Folgendes umfasst:
einen Winkelmessungssensor (720), der konfiguriert ist, einen Winkel des Hauptkörpers (10) zu dem Hindernis, das durch den Hindernissensor (710) detektiert wird, zu messen, wobei die Steuereinheit (900) konfiguriert ist, einen Abstand zwischen dem Hauptkörper (10) und dem Hindernis auf der Grundlage des Winkels, der durch den Winkelmessungssensor (720) gemessen wird, zu bestimmen.

3. Reinigungsroboter (1) nach Anspruch 1, der ferner einen Winkelmessungssensor (720) umfasst, der konfiguriert ist, einen Winkel des Hauptkörpers (10) zum Hindernis in einer Fahrtrichtung und einen Winkel des Hauptkörpers (10) zum Hindernis in einer Richtung quer zur Fahrtrichtung zu messen, wobei die Steuereinheit (900) konfiguriert ist, einen Abstand zwischen dem Hauptkörper (10) und dem Hindernis auf der Grundlage der zwei Winkel, die durch den Winkelmessungssensor (720) gemessen werden, zu berechnen.

4. Reinigungsroboter (1) nach den Ansprüchen 2 oder 3, wobei die Steuereinheit (900) konfiguriert ist, einen Bereich, der das Hindernis enthält, auf der Reinigungskarte als einen ersten befahrbaren Bereich, der durch reguläres Fahren überwunden werden kann, einzustellen, wenn der Abstand zwischen dem Hauptkörper (10) und dem Hindernis größer als ein erster eingestellter Wert ist.

5. Reinigungsroboter (1) nach Anspruch 4, wobei die Steuereinheit (900) konfiguriert ist, die Reinigungskarte, in der der erste befahrbare Bereich eingestellt ist, in der Speichereinheit (800) zu speichern, und wobei dann, wenn der Reinigungsroboter (1) das nächste Mal zu dem Bereich fährt, der als der erste befahrbare Bereich erkannt wurde, die Steuereinheit (900) konfiguriert ist, das Fahren durchzuführen, ohne zu bestimmen, ob der Bereich, in dem das Hindernis angeordnet ist, dem Gefahrenbereich entspricht.

6. Reinigungsroboter (1) nach Anspruch 4 oder 5, wobei die Steuereinheit (900) konfiguriert ist, einen Bereich, der das Hindernis enthält, auf der Reinigungskarte als einen zweiten befahrbaren Bereich, der durch eine Drehung des Fahrens des Hauptkörpers (10) überwunden werden kann, einzustellen, wenn der Abstand zwischen dem Hauptkörper (10) und dem Hindernis in einem Bereich vom ersten eingestellten Wert bis zu einem zweiten eingestellten Wert, der kleiner als der erste eingestellte Wert ist, liegt.

7. Reinigungsroboter (1) nach Anspruch 4 oder 5, wobei die Steuereinheit (900) konfiguriert ist, einen Bereich, der das Hindernis enthält, als einen zweiten befahrbaren Bereich zu erkennen, wenn der Abstand zwischen dem Hauptkörper (10) und dem Hindernis in einem Bereich vom ersten eingestellten Wert bis zu einem zweiten eingestellten Wert, der kleiner als der erste eingestellte Wert ist, liegt, und konfiguriert ist, die Antriebseinheit (400) zu steuern, den Hauptkörper (10) um einen bestimmten Abstand rückwärts zu bewegen und sich erneut vorwärts zu bewegen, um das Hindernis durch Beschleunigung des Hauptkörpers (10) zu überwinden.

8. Reinigungsroboter (1) nach Anspruch 6 oder 7, wobei die Steuereinheit (900) konfiguriert ist, die Reinigungskarte, in der der zweite befahrbare Bereich eingestellt ist, in der Speichereinheit (800) zu speichern, und wobei dann, wenn der Reinigungsroboter (1) das nächste Mal zu dem Bereich fährt, der als der zweite befahrbare Bereich erkannt wurde, die Steuereinheit (900) konfiguriert ist, das Fahren durchzuführen, ohne zu bestimmen, ob der Bereich, in dem das Hindernis angeordnet ist, dem Gefahrenbereich entspricht.

9. Reinigungsroboter (1) nach einem der Ansprüche 6 bis 8, wobei dann, wenn der Abstand zwischen dem Hauptkörper (10) und dem Hindernis kleiner als der zweite eingestellte Wert ist, die Steuereinheit (900) konfiguriert ist, einen Bereich, der das Hindernis enthält, als den Gefahrenbereich in der Speichereinheit (800) zu speichern.

10. Reinigungsroboter (1) nach einem der vorhergehenden Ansprüche, wenn abhängig von Anspruch 3, wobei die Steuereinheit (900) konfiguriert ist, Richtungsinformationen des Hindernisses in Bezug auf den Hauptkörper (10) auf der Grundlage von Winkelinformationen jeder Richtung, die durch den Winkelmessungssensor (720) gemessen werden, zu erfassen.

11. Reinigungsroboter (1) nach einem der vorhergehenden Ansprüche, wobei die Steuereinheit (900) konfiguriert ist, eine Höhe oder eine Tiefe des Hindernisses durch den Hindernisdetektionssensor (710) zu detektieren.

12. Reinigungsroboter (1) nach einem der vorhergehenden Ansprüche, wobei die Steuereinheit (900) konfiguriert ist zum:

   Unterteilen der Reinigungskarte in mehrere Blöcke,
   Einstellen des Gefahrenbereichs als einen anomalen Block, der unter Verwendung eines Symbols markiert wird, und
   Einstellen des befahrbaren Bereichs als einen regulären Block, der sich vom anomalen Block unterscheidet.

13. Verfahren zum Steuern eines Reinigungsroboters (1) nach einem der vorhergehenden Ansprüche, wobei das Verfahren Folgendes umfasst:

   Steuern des Hauptkörpers (10), auf der Grundlage der Reinigungskarte eine Reinigung durchzuführen, und Überwachen der Detektion des Hindernisses durch den Hindernisdetektionssensor (710) während des Fahrens;
   dann, wenn das Hindernis detektiert wird, Bestimmen, ob ein Bereich, in dem das Hindernis angeordnet ist, irgendeinem eines Gefahrenbereichs und eines befahrbaren Bereichs entspricht;

Steuern der Antriebseinheit (400), derart, dass der Hauptkörper (10) so fährt, dass der Gefahrenbereich vermieden wird, wenn der Gefahrenbereich erkannt wird; und

Steuern der Antriebseinheit (400) zu fahren, ohne das Hindernis zu vermeiden, wenn das Hindernis im befahrbaren Bereich angeordnet ist.

14. Verfahren nach Anspruch 13, wobei das Verfahren ferner Folgendes umfasst:

Messen eines Winkels des Hauptkörpers (10) zum Hindernis in einer Fahrtrichtung und eines Winkels des Hauptkörpers (10) zum Hindernis in einer Richtung quer zur Fahrtrichtung, und Berechnen eines Abstands zwischen dem Hauptkörper (10) und dem Hindernis auf der Grundlage der zwei Winkel, die durch den Winkelmessungssensor (720) gemessen werden.

15. Verfahren nach Anspruch 14, wobei das Verfahren ferner Folgendes umfasst:

- Einstellen eines Bereichs, der das Hindernis enthält, auf der Reinigungskarte als einen ersten befahrbaren Bereich, der durch reguläres Fahren überwunden werden kann, wenn der Abstand zwischen dem Hauptkörper (10) und dem Hindernis größer als ein erster eingestellter Wert ist; und/oder

- (i) Einstellen eines Bereichs, der das Hindernis enthält, auf der Reinigungskarte als einen ersten befahrbaren Bereich, der durch reguläres Fahren überwunden werden kann, wenn der Abstand zwischen dem Hauptkörper (10) und dem Hindernis größer als ein erster eingestellter Wert ist, und (ii) Einstellen eines Bereichs, der das Hindernis enthält, auf der Reinigungskarte als einen zweiten befahrbaren Bereich, wenn der Abstand zwischen dem Hauptkörper (10) und dem Hindernis in einem Bereich vom ersten eingestellten Wert bis zu einem zweiten eingestellten Wert, der kleiner als der erste eingestellte Wert ist, liegt, wobei der zweite befahrbare Bereich durch eine Drehung des Fahrens des Hauptkörpers (10) oder durch Rückwärtsbewegen des Hauptkörpers (10) um einen bestimmten Abstand und erneutes Vorwärtsbewegen, um das Hindernis durch Beschleunigung des Hauptkörpers (10) zu überwinden, überwunden werden kann; und/oder

- (i) Einstellen eines Bereichs, der das Hindernis enthält, auf der Reinigungskarte als einen ersten befahrbaren Bereich, der durch reguläres Fahren überwunden werden kann, wenn der Abstand zwischen dem Hauptkörper (10) und dem Hindernis größer als ein erster eingestellter Wert ist, und (ii) Einstellen eines Bereichs, der das Hindernis enthält, auf der Reinigungskarte als einen zweiten befahrbaren Bereich, wenn der Abstand zwischen dem Hauptkörper (10) und dem Hindernis in einem Bereich vom ersten eingestellten Wert bis zu einem zweiten eingestellten Wert, der kleiner als der erste eingestellte Wert ist, liegt, wobei der zweite befahrbare Bereich durch eine Drehung des Fahrens des Hauptkörpers (10) oder durch Rückwärtsbewegen des Hauptkörpers (10) um einen bestimmten Abstand und erneutes Vorwärtsbewegen, um das Hindernis durch Beschleunigung des Hauptkörpers (10) zu überwinden, überwunden werden kann, und (iii) Einstellen eines Bereichs, der das Hindernis enthält, auf dem Reinigungsbereich als den Gefahrenbereich, wenn der Abstand zwischen dem Hauptkörper (10) und dem Hindernis kleiner als der zweite eingestellte Wert ist.

**Revendications**

1. Robot nettoyeur (1) comportant :

un corps principal (10) incluant une unité d'entraînement (400) pour le mouvement ;
un capteur de détection d'obstacle (710) agencé dans le corps principal (10) pour détecter un obstacle ;
une unité de stockage (800) configurée pour stocker une carte de nettoyage ; et
une unité de commande (900) configurée pour commander au corps principal (10) d'effectuer un nettoyage sur la base de la carte de nettoyage, et de surveiller la détection de l'obstacle par le capteur de détection d'obstacle (710) tout en se déplaçant,
**caractérisé en ce que**, lorsque l'obstacle est détecté, l'unité de commande (900) est configurée pour déterminer si une zone où se situe l'obstacle correspond à une zone quelconque parmi une zone de danger et une zone pouvant être parcourue, dans lequel la zone de danger est une zone où se situe un obstacle qui interrompt le déplacement du corps principal (10), et la zone pouvant être parcourue est une zone où se situe un obstacle qui n'interrompt pas le déplacement du corps principal (10) ; et
dans lequel l'unité de commande (900) est configurée pour :

- commander l'unité d'entraînement (400) de telle sorte que le corps principal (10) se déplace pour éviter la zone de danger lorsque la zone de danger est reconnue, et
- commander un déplacement de l'unité d'entraînement(400) sans éviter l'obstacle lorsque l'obstacle se situe dans la zone pouvant être parcourue.

2. Robot nettoyeur (1) selon la revendication 1, comportant en outre :
un capteur de mesure d'angles (720) configuré pour mesurer un angle du corps principal (10) par rapport à l'obstacle détecté par le capteur d'obstacle (710), dans lequel l'unité de commande (900) est configurée pour déterminer une distance entre le corps principal (10) et l'obstacle sur la base de l'angle mesuré par le capteur de mesure d'angles (720).

3. Robot nettoyeur (1) selon la revendication 1, comportant en outre un capteur de mesure d'angles (720) configuré pour mesurer un angle du corps principal (10) par rapport à l'obstacle dans une direction de déplacement, et un angle du corps principal (10) par rapport à l'obstacle dans une direction croisant la direction de déplacement, et
dans lequel l'unité de commande (900) est configurée pour calculer une distance entre le corps principal (10) et l'obstacle sur la base des deux angles mesurés par le capteur de mesure d'angles (720).

4. Robot nettoyeur (1) selon la revendication 2 ou 3, dans lequel l'unité de commande (900) est configurée pour définir une zone incluant l'obstacle sur la carte de nettoyage comme une première zone pouvant être parcourue à surmonter par un déplacement normal, lorsque la distance entre le corps principal (10) et l'obstacle est supérieure à une première valeur de consigne.

5. Robot nettoyeur (1) selon la revendication 4, dans lequel l'unité de commande (900) est configurée pour stocker, dans l'unité de stockage (800), la carte de nettoyage dans laquelle la première zone pouvant être parcourue est définie, et dans lequel lors d'un prochain déplacement du robot nettoyeur (1) jusqu'à la zone reconnue comme étant la première zone pouvant être parcourue, l'unité de commande (900) est configurée pour effectuer le déplacement sans déterminer si la zone où l'obstacle se situe correspond à la zone de danger.

6. Robot nettoyeur (1) selon la revendication 4 ou 5, dans lequel l'unité de commande (900) est configurée pour définir une zone incluant l'obstacle sur la carte de nettoyage comme une seconde zone pouvant être parcourue à surmonter par un déplacement en rotation du corps principal (10), lorsque la distance entre le corps principal (10) et l'obstacle est dans une plage allant de la première valeur de consigne à une seconde valeur de consigne inférieure à la première valeur de consigne.

7. Robot nettoyeur (1) selon la revendication 4 ou 5, dans lequel l'unité de commande (900) est configurée pour reconnaître une zone incluant l'obstacle comme une seconde zone pouvant être parcourue lorsque la distance entre le corps principal (10) et l'obstacle est dans une plage allant de la première valeur de consigne à une seconde valeur de consigne inférieure à la première valeur de consigne, et est configurée pour commander à l'unité d'entraînement (400) de déplacer le corps principal (10) vers l'arrière sur une certaine distance et de se déplacer à nouveau vers l'avant pour surmonter l'obstacle par accélération du corps principal (10).

8. Robot nettoyeur (1) selon la revendication 6 ou 7, dans lequel l'unité de commande (900) est configurée pour stocker, dans l'unité de stockage (800), la carte de nettoyage dans laquelle la seconde zone mobile est définie, et dans lequel lors d'un prochain déplacement du robot nettoyeur (1) jusqu'à la zone reconnue comme étant la seconde zone pouvant être parcourue, l'unité de commande (900) est configurée pour effectuer le déplacement sans déterminer si la zone où l'obstacle se situe correspond à la zone de danger.

9. Robot nettoyeur (1) selon l'une quelconque des revendications 6 à 8, dans lequel lorsque la distance entre le corps principal (10) et l'obstacle est inférieure à la seconde valeur de consigne, l'unité de commande (900) est configurée pour stocker une zone incluant l'obstacle dans l'unité de stockage (800) comme étant la zone de danger.

10. Robot nettoyeur (1) selon l'une quelconque des revendications précédentes lorsque dépendante de la revendication 3, dans lequel l'unité de commande (900) est configurée pour acquérir des informations de direction de l'obstacle par rapport au corps principal (10) sur la base d'informations d'angle de chaque direction mesurée par le capteur de mesure d'angles (720).

11. Robot nettoyeur (1) selon l'une quelconque des revendications précédentes, dans lequel l'unité de commande (900) est configurée pour détecter une hauteur ou une profondeur de l'obstacle par le capteur de détection d'obstacle (710).

12. Robot nettoyeur (1) selon l'une quelconque des revendications précédentes, dans lequel l'unité de commande (900) est configurée pour :

diviser la carte de nettoyage en une pluralité de blocs,
définir la zone de danger comme un bloc anormal marqué en utilisant un symbole, et
définir la zone pouvant être parcourue comme un bloc normal différent du bloc anormal.

13. Procédé de commande d'un robot nettoyeur (1) selon l'une quelconque des revendications précédentes, le procédé comportant les étapes consistant à :

commander au corps principal (10) d'effectuer un nettoyage basé sur la carte de nettoyage, et surveiller la détection de l'obstacle par le capteur de détection d'obstacle (710) tout en se déplaçant ;

lorsque l'obstacle est détecté, déterminer si une zone où se situe l'obstacle correspond à une zone quelconque parmi une zone de danger et une zone pouvant être parcourue ;

commander l'unité d'entraînement (400) de telle sorte que le corps principal (10) se déplace afin d'éviter la zone de danger lorsque la zone de danger est reconnue ; et

commander à l'unité d'entraînement (400) de se déplacer sans éviter l'obstacle lorsque l'obstacle se situe dans la zone pouvant être parcourue.

14. Procédé selon la revendication 13, dans lequel le procédé comporte en outre de :

mesurer un angle du corps principal (10) par rapport à l'obstacle dans une direction de déplacement et un angle du corps principal (10) par rapport à l'obstacle dans une direction croisant la direction de déplacement, et

calculer une distance entre le corps principal (10) et l'obstacle sur la base des deux angles mesurés par le capteur de mesure d'angles (720).

15. Procédé selon la revendication 14, le procédé comportant en outre au moins une étape parmi :

- définir une zone incluant l'obstacle sur la carte de nettoyage comme une première zone pouvant être parcourue à surmonter par un déplacement normal, lorsque la distance entre le corps principal (10) et l'obstacle est supérieure à une première valeur de consigne ;

- (i) définir une zone incluant l'obstacle sur la carte de nettoyage comme une première zone pouvant être parcourue à surmonter par un déplacement normal, lorsque la distance entre le corps principal (10) et l'obstacle est supérieure à une première valeur de consigne, et (ii) définir une zone incluant l'obstacle sur la carte de nettoyage comme une seconde zone pouvant être parcourue, lorsque la distance entre le corps principal (10) et l'obstacle est dans une plage allant de la première valeur de consigne à une seconde valeur de consigne inférieure à la première valeur de consigne, dans lequel la seconde zone pouvant être parcourue peut être surmontée par un déplacement en rotation du corps principal (10), ou en déplaçant le corps principal (10) vers l'arrière sur une certaine distance et en le déplaçant à nouveau vers l'avant pour surmonter l'obstacle par accélération du corps principal (10) ; et

- (i) définir une zone incluant l'obstacle sur la carte de nettoyage comme une première zone pouvant être parcourue à surmonter par un déplacement normal, lorsque la distance entre le corps principal (10) et l'obstacle est supérieure à une première valeur de consigne, et (ii) définir une zone incluant l'obstacle sur la carte de nettoyage comme une seconde zone pouvant être parcourue, lorsque la distance entre le corps principal (10) et l'obstacle se situe dans une plage allant de la première valeur de consigne à une seconde valeur de consigne inférieure à la première valeur de consigne, dans lequel la seconde zone pouvant être parcourue peut être surmontée par un déplacement en rotation du corps principal (10), ou en déplaçant le corps principal (10) vers l'arrière sur une certaine distance et en le déplaçant à nouveau vers l'avant pour surmonter l'obstacle par accélération du corps principal (10), et (iii) définir une zone incluant l'obstacle sur la carte de nettoyage comme la zone de danger, lorsque la distance entre le corps principal (10) et l'obstacle est inférieure à la seconde valeur de consigne.

Fig.1

Fig.2

Fig.3

Fig.4

Fig.5

TRAVELING DIRECTION

O

Y

Ya

1

X

Xa

TILT DIRECTION

Fig.6

Fig.7

Fig.8

```
                            ┌─────────────┐
                            │    START    │
                            └─────────────┘
                                   │
  S11                              ▼
         ╱─────────────────────────────────────╲      NO
        ╱          CLEANING START COMMAND?       ╲─────────┐
        ╲                                        ╱         │
         ╲─────────────────────────────────────╱          │
                      │ YES                                │
  S13                 ▼                                    │
         ┌─────────────────────────────────┐              │
         │          START CLEANING          │             │
         └─────────────────────────────────┘              │
                      │                                    │
  S15                 ▼                              NO    │
         ╱─────────────────────────────────╲ ───────────────────────┐
        ╱          OBSTACLE DETECTED?        ╲                  │    │
        ╲                                    ╱                  │    │
         ╲─────────────────────────────────╱                   │    │
                      │ YES                                     │    │
  S17                 ▼                                         │    │
   YES  ╱─────────────────────────────────╲                    │    │
   ┌────╱            DANGER AREA?           ╲                   │    │
   │    ╲                                   ╱                   │    │
   │     ╲─────────────────────────────────╱                   │    │
   │                  │ NO                                      │    │
  S18     S19         ▼                                         │    │
┌────────┐  ┌─────────────────────────────────┐                │    │
│ TRAVEL │  │           TRY TO ENTER           │                │    │
│ AFTER  │  └─────────────────────────────────┘                │    │
│AVOIDANCE│              │                                      │    │
└────────┘  S21          ▼                           YES        │    │
   │        ╱─────────────────────────────╲ ──────────────┐    │    │
   │       ╱    MEASURED DISTANCE           ╲              │    │    │
   │       ╲  VALUE>FIRST SET VALUE?        ╱              │    │    │
   │        ╲─────────────────────────────╱                │    │    │
   │                  │ NO                                 │    │    │
   │      S23          ▼                        YES        │    │    │
   │        ╱─────────────────────────────╲ ─────────┐    │    │    │
   │       ╱  MEASURED DISTANCE VALUE       ╲         │    │    │    │
   │       ╲     >SECOND SET VALUE?         ╱         │    │    │    │
   │        ╲─────────────────────────────╱          │    │    │    │
   │                  │ NO               S24          │ S22│    │    │
   │  S25             ▼                               ▼    ▼    │    │
   │  ┌─────────────────────────┐  ┌──────────────┐ ┌──────┐   │    │
   │  │   REGISTER DANGER AREA   │  │  ROTATE AND  │ │ENTER │   │    │
   │  └─────────────────────────┘  │ENTER THRESHOLD│ └──────┘   │    │
   │  S27             │             └──────────────┘   │        │    │
   │  ┌─────────────────────────┐         │            │        │    │
   │  │     CHANGE DIRECTION     │         │            │        │    │
   │  └─────────────────────────┘         │            │        │    │
   │                  │                    │            │        │    │
   └──────────────────┼────────────────────────────────┘        │    │
  S29                 ▼                                          │    │
         ╱─────────────────────────────────╲      NO            │    │
        ╱          CLEANING COMPLETED?       ╲───────────────────┘    │
        ╲                                    ╱                        │
         ╲─────────────────────────────────╱                         │
                      │ YES
                      ▼
                ┌──────────┐
                │   END    │
                └──────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020110053767
- US 9014855 B2
- EP 2583610 A2
- EP 2065774 B1